# EUROPÄISCHE PATENTSCHRIFT

(11) **EP 1 212 206 B1**
(45) Veröffentlichungstag und Bekanntmachung des Hinweises auf die Patenterteilung: **25.08.2004**
(21) Anmeldenummer: 00965820.4
(22) Anmeldetag: 30.08.2000
(51) Int. Cl.: B60J 5/04

(54) **TÜRMODUL ZUR BEFESTIGUNG AN EINEM EIN TÜRBASISTEIL BILDENDEN TÜRKÖRPER EINER KRAFTFAHRZEUGTÜR UND VERFAHREN ZUR MONTAGE EINES SOLCHEN TÜRMODULS**
DOOR MODULE FOR FIXING TO A DOOR BODY FORMING A BASE COMPONENT OF A DOOR AND PERTAINING TO A DOOR OF A MOTOR VEHICLE AND METHOD FOR ASSEMBLING SUCH A DOOR MODULE
MODULE DE PORTE A FIXER SUR UN CORPS DE PORTE CONSTITUANT UNE PARTIE DE BASE DE PORTE D'UN VEHICULE AUTOMOBILE, ET PROCEDE DE MONTAGE D'UN TEL MODULE DE PORTE

(30) Priorität: 30.08.1999 DE 19942650
(43) Veröffentlichungstag der Anmeldung: 12.06.2002
(73) Patentinhaber: Brose Fahrzeugteile GmbH & Co. KG, Coburg, 96450 Coburg (DE)
(72) Erfinder: HAAGEN, Thomas, 96215 Lichtenfels (DE); SLAVIK, Thomas, 91220 Schnaittach (DE)
(74) Vertreter: Baumgärtel, Gunnar, Dr.
(86) Internationale Anmeldenummer: PCT/DE2000/003053
(87) Internationale Veröffentlichungsnummer: WO 2001/015923

(56) Entgegenhaltungen:
- EP-A- 0 302 725
- EP-A- 0 405 159
- FR-A- 2 626 534
- US-A- 5 787 646
- US-A- 5 927 021

## Beschreibung

Die Erfindung betrifft ein Türmodul zur Befestigung an einem ein Türbasisteil bildenden Türkörper einer Kraftfahrzeugtür nach dem Oberbegriff des Patentanspruchs 1 und eine Kraftfahrzeugtür mit einem ein Türbasisteil bildenden Türkörper und mit einem derartigen Türmodul sowie ein Verfahren zur Montage eines derartigen Türmoduls. Ein Türmodul nach der Gattung des Türmoduls nach US-A-5 927 021 umfaßt eine Rahmenstruktur mit einem Fensterrahmen, einen flächig Aggregateträger zur Aufnahme von Funktionskomponenten der Fahrzeugtür, an dem zumindest die die Fensterscheibe aufnehmenden Bauelemente des Hebemechanismus eines Fensterhebers vormontiert sind, und einen oder mehrere an der Rahmenstruktur vorgesehene Befestigungsknoten, bei denen es sich um an der Rahmenstruktur vorgesehene Befestigungsstellen handelt, über die die Rahmenstruktur mit dem Türkörper verbindbar ist.

Unter dem Türkörper wird hierbei insbesondere ein Türbasisteil mit einem Türaußenblech und einem einen großflächigen, durch den Aggregateträger abdeckbaren Ausschnitt aufweisenden Türinnenblech oder einer mit dem Türaußenblech verbundenen, sich in Richtung auf den Fahrzeuginnenraum erstreckenden Aufnahme für den Aggregateträger verstanden, das zusammen mit dem Türrahmen und dem Aggregateträger die wesentlichen tragenden Türkomponenten bildet, an denen die weiteren Funktionskomponenten der Fahrzeugtür befestigt sind.

Unter den die Fensterscheibe aufnehmenden Bauelementen eines Fensterhebers werden diejenigen Bauelemente des Fensterhebers verstanden, die die Fensterscheibe tragen und dadurch ihre Position in der Fahrzeugtür festlegen, also im Fall eines Seilfensterhebers insbesondere die Führungsschiene und der an der Führungsschiene geführte Mitnehmer und im Fall eines Armfensterhebers insbesondere der mindestens eine Hebelarm und die zugehörige Scheibenaufnahme.

Ein Türmodul der vorstehend beschriebenen Art ist aus der deutschen Patentschrift DE-C-977 009 bekannt.

In der US-A-5,927,021 ist eine Fahrzeugtür beschrieben, die aus einem Türkörper und einem hieran befestigbaren Türrahmen mit einem Aggregateträger besteht. Hierbei sind der Türrahmen und der Aggregateträger zu einer Baueinheit zusammengefasst und sind gemeinsam über Einstellmittel verschwenkbar mit dem Türkörper verbunden. Die zur Einstellung des Türrahmens zusammen mit dem Aggregateträger relativ zu dem Körper vorgesehenen Einstellmittel sind dabei am Türkörper angeordnet.

Aus der EP-A-0 405 159 ist eine Kraftfahrzeugtür mit einem Türkörper bekannt, in den der Türrahmen als Bestandteil integriert ist und an dem ein Aggregateträger in Form zweier Schienen befestigbar ist. Hierbei ist keine Verstellmöglichkeit des Türrahmens relativ zu dem Türkörper vorgesehen.

Der Erfindung liegt die Aufgabe zugrunde, das bekannte Türmodul dahingehend zu verbessern, daß die Montage der Fahrzeugtür erleichtert wird, insbesondere hinsichtlich der Justierung der Lage der verschiedenen Türkomponenten zueinander.

Diese Aufgabe wird erfindungsgemäß durch die Schaffung eines Türmoduls mit den Merkmalen des Patentanspruchs 1 gelöst.

Danach weist das Türmodul an dem oder den Befestigungsknoten Mittel zur Einstellung der Position des Fensterrahmens bezüglich des Befestigungsknotens und des Aggregateträgers im wesentlichen quer zu der Ebene (Türebene) auf, in der sich der Aggregateträger erstreckt, d.h. der Fensterrahmen ist derart einstellbar, daß die Einstellbewegung eine Komponente quer zur Türebene aufweist.

Die Formulierung "im wesentlichen quer zur Türebene " soll darauf hinweisen, daß die durch eine Fahrzeugtür bzw. deren Aggregateträger definierte Ebene in der Regel Krümmungen und Ausformungen aufweist, so daß die Definition einer Türebene stets nur näherungsweise erfolgen kann.

Die erfindungsgemäße Lösung hat den Vorteil, daß beim Zusammenbau des Türmoduls eine präzise Ausrichtung des Fensterrahmens bezüglich des oder der Befestigungsknoten quer zur Türebene (in der insbesondere der Aggregateträger liegt) möglich ist, so daß die Ausrichtung des Fensterrahmens präzise an die durch den Aufbau der Türkarosserie bestimmten Vorgaben angepaßt werden kann.

Vorzugsweise sind die Mittel zur Einstellung der Position des Fensterrahmens bezüglich des Befestigungsknotens ausschließlich an dem oder den Befestigungsknoten vorgesehen.

Der Befestigungsknoten kann durch ein separates Bauteil des Türmodules gebildet werden, das mit dem Aggregateträger fest verbindbar ist und das den Fensterrahmen justierbar aufnimmt.

In einer bevorzugten Ausführungsform der Erfindung ist der Befestigungsknoten im Bereich des der Fensteröffnung zugewandten oberen Endabschnittes des Aggregateträgers angeordnet, wobei er sich gleichzeitig in der Türebene (xz-Ebene) seitlich von dem Aggregateträger absteht.

Zur Aufnahme von Teilen des Fensterrahmens sowie von Mitteln zur Einstellung der Position des Fensterrahmens ist der Befestigungsknoten gehäuseartig ausgebildet.

Der oder die Befestigungsknoten und der Aggregateträger bilden vorzugsweise eine vormontierbare Baueinheit, bezüglich der die Einstellung des Fensterrahmens quer zur Erstreckungsebene des Aggregateträgers erfolgt. Hierzu sind der oder die Befestigungsknoten und der Aggregateträger in geeigneter Weise miteinander verbunden.

Beim späteren Zusammenbau des Türmoduls mit dem Türkörper durch Verbindung der Befestigungsknoten mit dem Türkörper muß dann nur noch eine Justierung des Türmoduls bezüglich des Türkörpers innerhalb der Türebene (Erstreckungsebene des Aggregateträgers) erfolgen. Quer zur Türebene kann die Verbindung zwischen Türmodul und Türkörper demgegenüber ohne Justagespiel erfolgen. Der oder die Befestigungsknoten können hierzu einen Montagezapfen aufweisen, der in eine entsprechende Aufnahme des Türkörpers einführbar ist und dabei quer zur Türebene eine im wesentlichen spielfreie Festlegung des jeweiligen Befestigungsknotens an dem Türkörper ermöglicht.

Durch die genannten Maßnahmen wird erreicht, daß der Fensterrahmen (durch Verschwenken) sowohl bezüglich des Türkörpers als auch bezüglich des Aggregateträgers quer zur Türebene einstellbar ist, wobei die Einstellung des Fensterrahmen unmittelbar bezüglich des Befestigungsknotens vorgenommen wird und der Türkörper sowie der Aggregateträger ohne Justagespiel senkrecht zur Türebene bezüglich des Befestigungsknotens festgelegt werden.

Sofern das Türmodul zwei Befestigungsknoten aufweist, sind diese bezüglich der Fahrzeuglängsrichtung hintereinander angeordnet, so daß - bezogen auf eine vordere Fahrzeugtür-der eine Befestigungsknoten der A-Säule und der andere Befestigungsknoten der B-Säule des Fahrzeugs zugeordnet ist. Hierbei kann jeder der beiden Befestigungsknoten Mittel zur Einstellung der Position des Fensterrahmens aufweisen, oder diese Mittel sind nur einem der Befestigungsknoten zugeordnet, und im Bereich des anderen Befestigungsknotens wird die Verstellung des Fensterrahmens lediglich passiv nachvollzogen.

Die Einstellung der Position des Fensterrahmens quer zur Türebene erfolgt insbesondere durch Verschwenken des Fensterrahmens um eine im wesentliche parallel zur Fahrzeuglängsachse verlaufende Schwenkachse. Hierzu wirken der Fensterrahmen und der jeweilige Befestigungsknoten vorzugsweise nach dem Kugel-Pfanne-Prinzip zusammen, und es ist ein Keil vorgesehen, der mit einer Keilfläche an dem Befestigungsknoten und mit einer anderen Keilfläche an dem Fensterrahmen anliegt und zwischen dem Befestigungsknoten und dem Fensterrahmen verschiebbar ist, um eine Schwenkbewegung des Fensterrahmens bezüglich des Befestigungsknotens auszulösen. Anstelle eines verschiebbaren Keil kann auch ein in der Türebene verschwenkbarer Schwenkkeil vorgesehen sein.

Das Verschwenken des Fensterrahmen ist ein Spezialfall jener besonders bevorzugten Einstellbewegungen, bei denen die Komponente der Einstellbewegung quer zur Türebene größer ist als die in der Türebene liegenden Komponenten, also die Hauptkomponente der Einstellbewegung bildet.

Die Mittel zur Einstellung der Position des Fensterrahmens sollen unabhängig von den Befestigungsmitteln wirken, über die der Fensterrahmen mit dem jeweiligen Befestigungsknoten verbunden wird. Das heißt, bei den Mitteln zur Einstellung der Position des Fensterrahmens bezüglich des Befestigungsknotens handelt es sich um separate Einstellmittel, die nach einer ersten Vormontage des Fensterrahmens an dem Befestigungsknoten eine gezielte Einstellung der Position des Fensterrahmens bezüglich des Befestigungsknotens ermöglichen. Erst danach erfolgt die endgültige Fixierung des Fensterrahmens an dem Befestigungsknoten, wobei die hierfür verwendeten Befestigungsmittel vorzugsweise zugleich die zuvor eingestellte Position des Fensterrahmens arretieren.

In einer bevorzugten Ausführungsform der Erfindung weist das Türmodul zusätzlich Mittel zur Versteifung der Tür auf, die im Brüstungsbereich der Tür vorgesehen sind und sich in Fahrzeuglängsrichtung erstrecken. Der Türkörper kann dann im Brüstungsbereich ohne derartige, sich in Fahrzeuglängsrichtung erstreckende Mittel ausgeführt sein.

Die Mittel zur Versteifung der Tür umfassen vorzugsweise ein längserstrecktes Verstärkungselement, das in Fahrzeuglängsrichtung zwischen zwei Befestigungsknoten verläuft und an diesen befestigt ist.

Um eine Formschlüssige Verbindung zwischen dem längserstreckten Verstärkungselement und den Befestigungsknoten zu ermöglichen, ist das längserstreckte Verstärkungselement zumindest im Bereich der Befestigungsknoten rohrförmig ausgebildet und auf entsprechende Zapfen der Befestigungsknoten nach Art einer Steckverbindung aufsteckbar. Hierbei stützt sich das längserstreckte Verstärkungselement zugleich an den Befestigungsknoten ab. Alternativ kann natürlich auch ein rohrförmiger Abschnitt an den Befestigungsknoten vorgesehen sein, dem jeweils ein entsprechender Zapfen des längserstreckten Verstärkungselementes zugeordnet ist.

In einer bevorzugten Weiterbildung ist das längserstreckte Verstärkungselement zusätzlich mit dem Aggregateträger verbunden, insbesondere durch Schweißen, und der Aggregateträger weist im Bereich des längserstreckten Verstärkungselementes eine Materialverstärkung und/oder eine längserstreckte Profilierung auf, wobei letztere das Verstärkungselement zumindest teilweise umgeben kann. Hierdurch wird die Versteifung der Fahrzeugtür im Brüstungsbereich optimiert.

An dem Aggregateträger können neben dem Fensterheber noch weitere Funktionskomponenten der Fahrzeugtür vormontiert sein.

Bei einer Kraftfahrzeugtür, die aus einem ein Türbasisteil bildenden Türkörper und einem Türmodul nach einem der vorhergehenden Ansprüche besteht, sind das Türmodul einerseits und der Türkörper andererseits vorzugsweise derart ausgebildet, daß das Türmodul mit mindestens einem Abschnitt seiner Rahmenstruktur in den Türkörper einschiebbar ist. Hierzu weist der Türkörper einen entsprechenden Aufnahmeschacht auf.

Nach dem Einfügen des Türmoduls in den Türkörper ist noch die Position des Türmoduls bezüglich des Türkörpers in der Türebene einstellbar. Hierzu können Bolzen vorgesehen sein, denen entsprechende, sich entlang der jeweiligen Einstellrichtung erstreckende Langlöcher zugeordnet sind.

Ein Verfahren zur Montage einer Kraftfahrzeugtür, die aus einem ein Türbasisteil bildenden Türkörper und einem erfindungsgemäßen Türmodul besteht, ist durch die Merkmale des Anspruchs 31 charakterisiert.

Danach wird bei der Montage der Fahrzeugtür zunächst die Position des Fensterrahmens bezüglich des oder der Befestigungsknoten quer zu der Türebene (Erstreckungsebene des Aggregateträgers) eingestellt und anschließend das Türmodul mit dem Türkörper verbunden. Nach der Verbindung des Türmoduls mit dem Türkörper kann eine Justage dieser beiden Baugruppen zueinander innerhalb der Türebene erfolgen.

Die Justage und Montage erfolgen vorzugsweisen mittels Lehren, die die jeweiligen Referenzpunkte miteinander in Beziehung setzen.

Weitere Vorteile der Erfindung werden bei der nachfolgenden Beschreibung eines Ausführungsbeispiels anhand der Figuren deutlich werden.

Es zeigen:
- Fig. 1 -: eine perspektivische Darstellung eines Fensterrahmens, dem ein vorderer und ein hinterer Befestigungsknoten zugeordnet sind;
- Fig. 2 -: einen Fensterrahmen gemäß Fig. 1 mit einer zusätzlich dargestellten Scheibendichtung;
- Fig. 3 -: einen Ausschnitt aus Fig. 2;
- Fig. 4 -: eine detaillierte Darstellung des vorderen Befestigungsknotens;
- Fig. 5 und 6 -: eine detaillierte Darstellung des hinteren Befestigungsknotens in zwei verschiedenen perspektivischen Ansichten;
- Fig. 7 -: eine perspektivische Darstellung eines Aggregateträgers, an dem verschiedene Funktionselemente der Fahrzeugtür vormontiert sind und der in dem Brüstungsbereich eine Verstärkung aufweist;
- Fig. 8 -: ein Türmodul bestehend aus einem Fensterrahmen gemäß den Figuren 1 bis 3, Befestigungsknoten gemäß den Figuren 4 bis 6 und dem Aggregateträger gemäß Fig. 7 im vormontierten Zustand;
- Fig. 9 -: einen Türkörper, der zur Aufnahme des Türmoduls aus Fig. 8 geeignet ist;
- Fig. 10 -: einen Montageschritt beim Zusammenbau des Türmoduls und des Türkörpers;
- Fig. 11 -: Türmodul und Türkörper im zusammengebauten Zustand;
- Fig. 12 -: einen Schnitt durch die Darstellung gemäß Fig. 11.

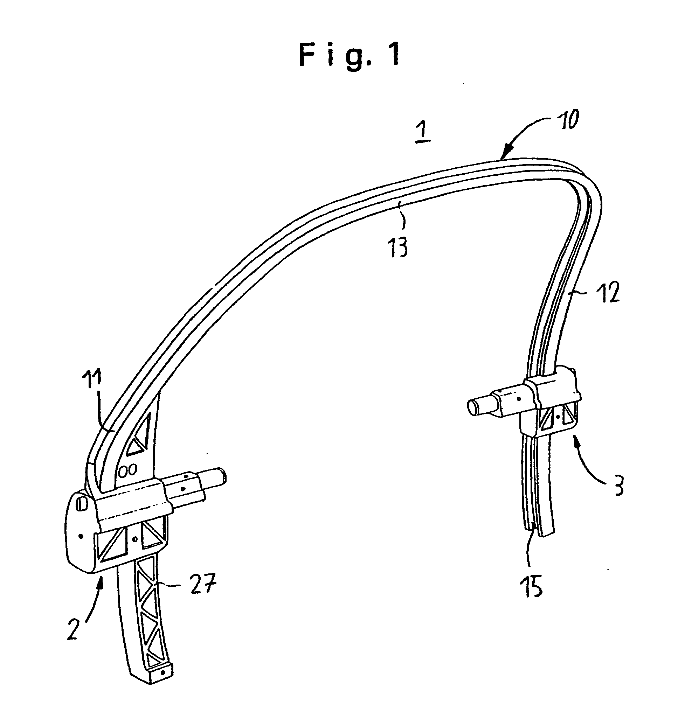

In Fig. 1 ist eine Rahmenstruktur 1 einer Fahrzeugtür mit einem Fensterrahmen 10 dargestellt, der ein vorderes seitliches Rahmenteil 10 und ein hinteres seitliches Rahmenteil 11 aufweist, die über ein oberes Rahmenteil 13 miteinander verbunden sind, und der mit einem Führungskanal 15 für eine Fensterscheibe versehen ist.

Das vordere Rahmenteil 11 ist an einem vorderen Befestigungsknoten 2 befestigt, an dem einstückig ein zusätzlicher Rahmenabschnitt 27 angeformt ist. Dem hinteren Rahmenteil 12 ist in entsprechender Weise ein hinterer Befestigungsknoten 3 zugeordnet.

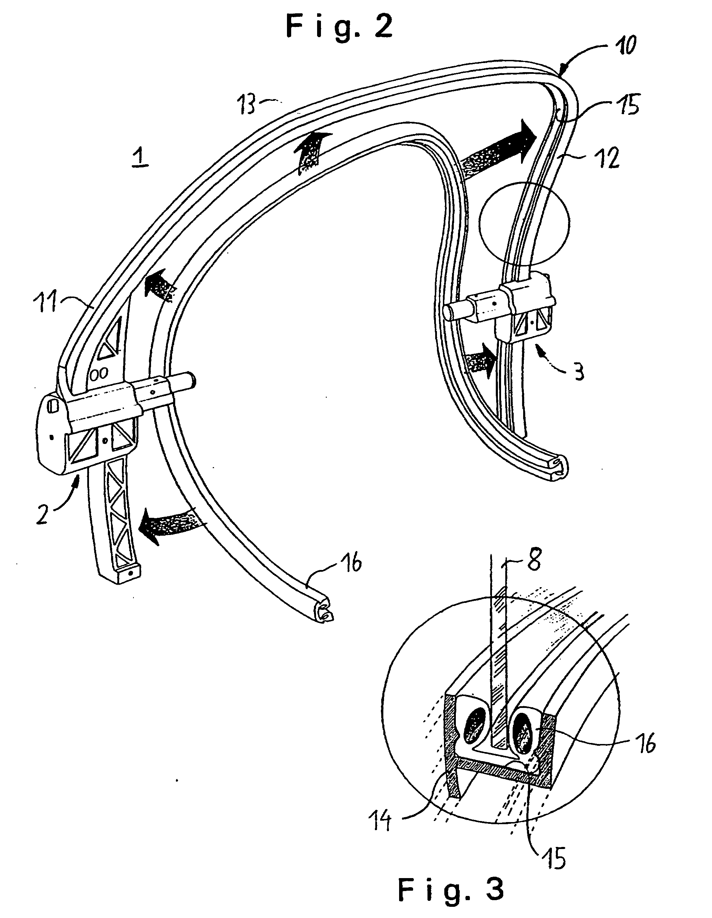

In Fig. 2 ist zusätzlich eine Scheibendichtung 16 dargestellt, die in den Führungskanal 15 des Fensterrahmens 10 eingefügt wird.

Fig. 3 zeigt einen Querschnitt durch das hintere Rahmenteil 12, aus dem deutlich wird, daß der Fensterrahmen 10 durch ein vorzugsweise in einem Streck-Biegeverfahren hergestellten, im Querschnitt h-förmiges Aluminiumprofil 14 gebildet wird, das einen Führungskanal 15 aufweist, in den die Scheibendichtung 16 eingelegt ist. Die Scheibendichtung 16 ist im wesentlichen U-förmig ausgebildet und nimmt zwischen ihren Schenkeln eine Fensterscheibe 8 auf.

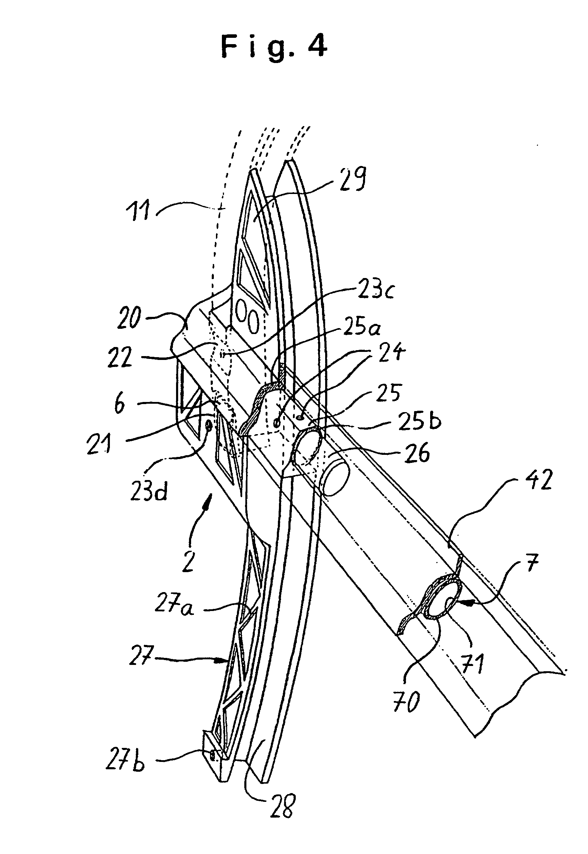

In Fig. 4 ist der vordere (A-säulenseitige) Befestigungsknoten 2 im Detail dargestellt. Bei diesem Befestigungsknoten 2 handelt es sich um ein Aluminium-Druckgußbauteil mit einem Grundkörper 20, an dem einstückig ein Vorsprung 25 zur Aufnahme eines Aggregateträgers und einer Brüstungsverstärkung, ein Rahmenabschnitt 27 und ein Spiegeldreieck 29 angeformt sind.

Der Grundkörper 20 des vorderen Befestigungsknotens 2 nimmt in einer hierfür vorgesehenen Führung das vordere Rahmenteil 11 des Fensterrahmens auf. Zwischen einer inneren Oberfläche 21 des Befestigungsknotens und dem vorderen Rahmenteil 11 ist dabei ein Keil 6 angeordnet, dessen geneigte Keilflächen nach oben hin spitz zusammenlaufen und der mit einer Keilfläche an der inneren Oberfläche 21 des Befestigungsknotens und mit der anderen Keilfläche an dem vorderem Rahmenteil 11 anliegt.

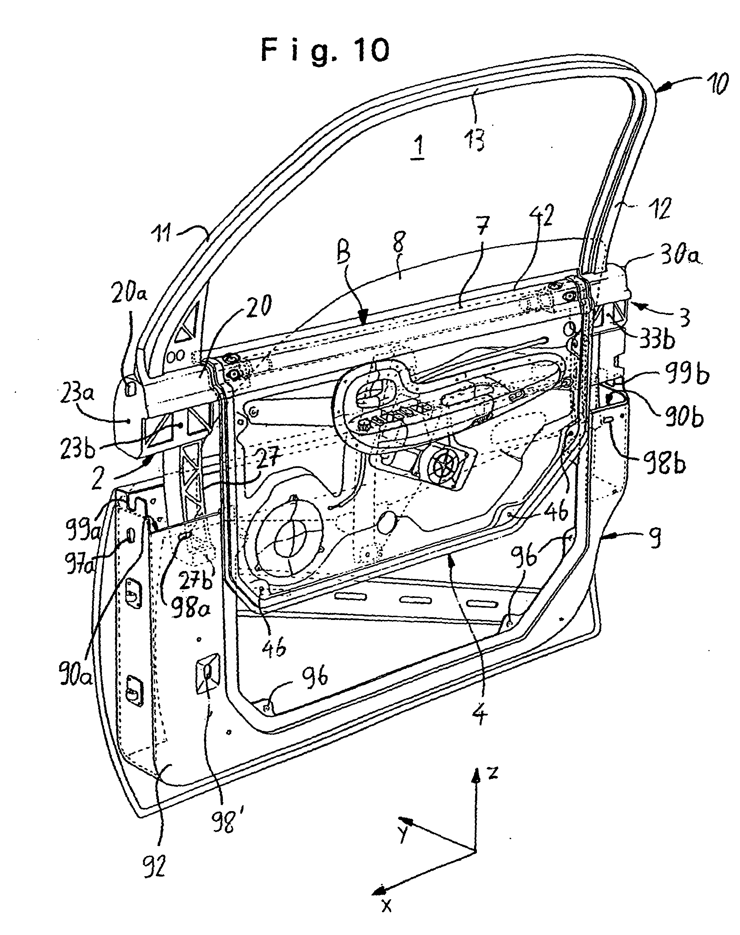

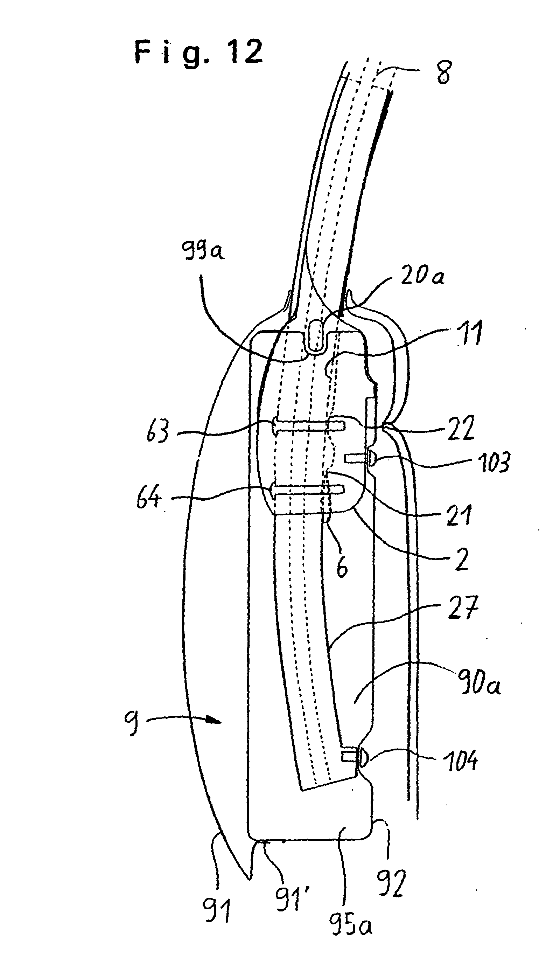

Dadurch daß der Grundkörper 20 des vorderen Befestigungsknoten 2 auf seiner dem vorderen Rahmenteil 11 zugewandten inneren Oberfläche 21 eine konvexe Erhebung 22 aufweist, an der das vordere Rahmenteil 11 anliegt, wirken das vordere Rahmenteil 11 und der Grundkörper 20 des vorderen Befestigungsknotens 2 im Bereich dieser Erhebung 22 (oberhalb des Keiles 6) nach dem Kugel-Pfanne-Prinzip zusammen. Eine Verschiebung des Keiles 6 nach oben führt daher zu einer Schwenkbewegung des vorderen Rahmenteiles 11 und damit des gesamten Fensterrahmens um diese Erhebung 22, vergl. hierzu auch den Querschnitt durch den vorderen Befestigungsknoten 2 im A-säulenseitigen Bereich einer Fahrzeugtür gemäß Fig. 12. Diese Schwenkbewegung ist darauf zurückzuführen, daß eine Verschiebung des spitz zulaufenden Keiles 6 nach oben (zu der Erhebung 22 hin) in dem Bereich unterhalb der Erhebung 22 eine Verschiebung des Fensterrahmen 11 nach außen hin (in Richtung auf das Türaußenblech 91 gemäß Fig. 12) bewirkt. Dies führt oberhalb der Erhebung 22 zu einer Bewegung des Fensterrahmens 11 in entgegengesetzter Richtung, also zum Fahrzeuginnenraum hin. Insgesamt kommt es so zu einer Schwenkbewegung des Fensterrahmens 11 um die Erhebung 22 der Innenfläche 21 des Befestigungsknotens 2. Dies ist gleichbedeutend mit einer Schwenkbewegung des vorderen Rahmenteils 11 und damit des gesamten Fensterrahmens um die Fahrzeuglängsachse (x-Achse, vergl. Fig. 10), durch die das Rahmenteil 11 aus der Türebene (xz-Ebene) heraus verschwenkbar ist.

Anhand Fig. 4 ist ferner erkennbar, daß der Grundkörper 20 des vorderen Befestigungsknotens 2 im Bereich der Erhebung 22 eine Befestigungsöffnung 23c aufweist. Dies gestattet eine Befestigung des Fensterrahmens 11 an dem Grundkörper 20 des Befestigungsknotens 2 im Bereich der Erhebung 22 mittels eines geeigneten Befestigungsbolzens 63, vergl. Fig. 12. Dort ist auch ersichtlich, daß eine zusätzliche Befestigung zwischen dem Grundkörper 20 und dem vorderen Rahmenteil 11 im Bereich des Keiles 6 mittels eines weiteren Befestigungsbolzens 64 erfolgt (wozu der Keil ein entsprechendes Langloch aufweist). Durch die beiden Befestigungsbolzen 63, 64 kann eine zuvor durch Verschiebung des Keiles 6 vorgenommene Einstellung des Türrahmens 11 bezüglich des vorderen Befestigungsknotens 2 fixiert werden.

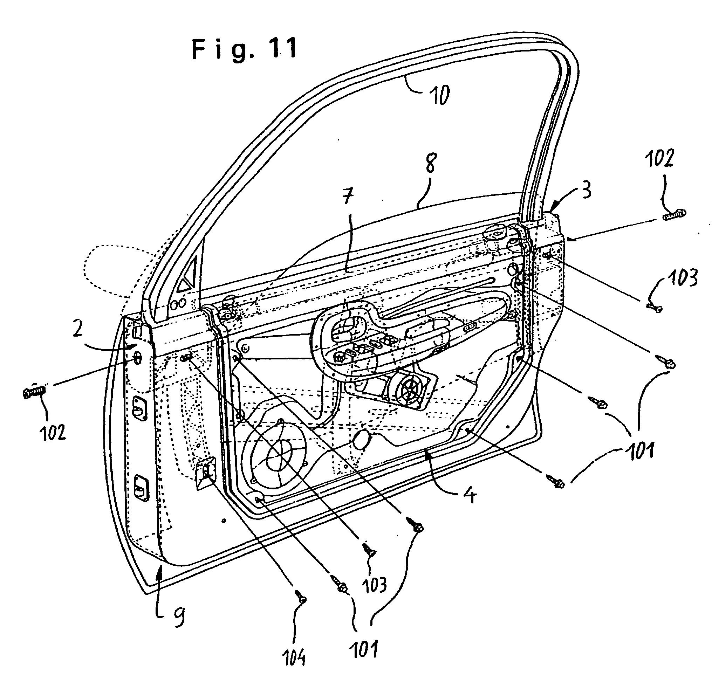

Gemäß Fig. 4 weist der Grundkörper 20 des vorderen Befestigungsknotens 2 außerdem eine Befestigungsöffnung 23d auf, die zur Befestigung an einem Türkörper mittels einer Befestigungsschraube 103 dient, vergl. Figuren 11 und 12.

Von dem Grundkörper 20 des vorderen Befestigungsknotens 2 steht ein in Fahrzeugslängsrichtung (x-Richtung, vergl. Fig. 10) ausgerichteter Vorsprung 25 ab, der zwei Befestigungsöffnungen 24 zur Befestigung des profilierten oberen Abschnitts 42 eines Aggregateträgers sowie einen Zapfen 26 zur Aufnahme eines rohrförmigen Verstärkungselementes 7 aufweist. Der profilierte Abschnitt 42 eines Aggregateträgers liegt unmittelbar auf dem Vorsprung 25 des vorderen Befestigungsknotens 2 an und stützt sich zusätzlich in Fahrzeuglängsrichtung an einer Stützfläche 25a des Grundkörpers 20 des Befestigungsknotens 2 ab. Das Befestigungsrohr 7 ist auf den Zapfen 26 aufgeschoben und liegt mit der Innenfläche 71 seiner äußeren Wand 17 an diesem Zapfen an. Zusätzlich stützt er sich in Fahrzeugslängsrichtung an eine Anschlagfläche 25b des Vorsprunges 25 ab.

Der obere Abschnitt 42 des Aggregateträgers 4 begrenzt zugleich die durch den Rahmen 10 gebildete Fensteröffnung in dem Türmodul nach unten, vergl. Figuren 1, 2 und 8. Diese Fensteröffnung wird durch die Rahmenteile 11 - 13 des Fensterrahmens 10 sowie durch dem mit einem Verstärkungselement 7 versehenen oberen Abschnitt 42 des Aggregateträgers 4 definiert.

Nach unten hin ist an den Grundkörper 20 des Befestigungsknotens 2 ein Rahmenabschnitt 27 angeformt, der Verstärkungsrippen 27a, eine Befestigungsstelle in Form einer Befestigungsöffnung 27b zur Befestigung an einem Türkörper sowie eine Scheibenführung 28 aufweist. Die Scheibenführung 28 in Form eines Führungskanales setzt sich nach oben hin fort bis zu einem an der Oberseite des Grundkörpers 22 angeformten Spiegeldreieck 29, an dem ein Außenspiegel befestigbar ist.

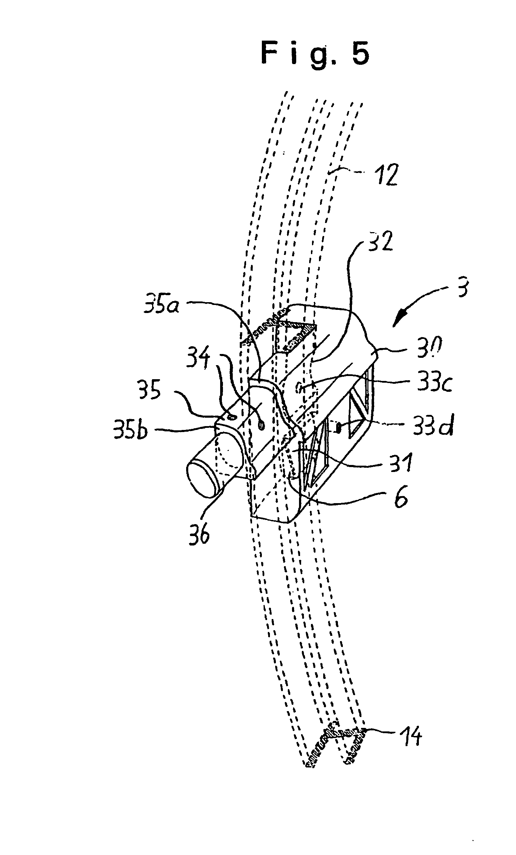

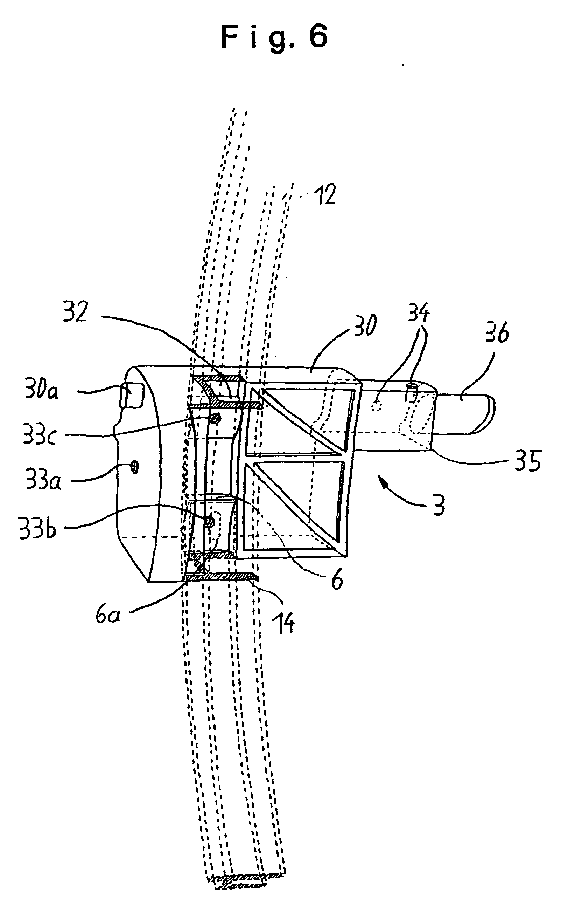

In den Fig. 5 und 6 ist in zwei perspektivischen Darstellungen der hintere (im Fall einer Vordertür also der B-säulenseitige) Befestigungsknoten 3 gezeigt, der als Aluminiumdruckgußbauteil ausgebildet ist.

Der hintere Befestigungsknoten 3 umfaßt einen Grundkörper 30, an dem ein Vorsprung 35 zur Aufnahme eines Aggregateträgers sowie eines rohrförmigen Verstärkungselementes angeformt ist. Der Vorsprung 35 weist zwei Befestigungsstellen in Form von Befestigungsöffnungen 34 auf, über die der obere Abschnitt eines Aggregateträgers an dem hinteren Befestigungsknoten 3 befestigbar ist, wobei sich der Aggregateträger zusätzlich in Fahrzeugslängsrichtung an einer Anschlagfläche 35a des Grundkörpers 30 des hinteren Befestigungsknotens 3 abstützen kann. An dem Vorsprung 35 ist ferner ein sich in Fahrzeugslängsrichtung (x-Richtung, vgl. Fig. 10) erstreckender Zapfen 36 angeformt, auf den ein rohrförmiges Verstärkungselement aufgeschoben werden kann, wobei diesem rohrförmigen Verstärkungselement zusätzlich eine Anschlagfläche 35b an dem Vorsprung 35 zugeordnet ist, an der es sich in Fahrzeuglängsrichtung abstützen kann.

Der Grundkörper 30 des hinteren Befestigungsknotens 3 weist eine Führung zur Aufnahme des hinteren Rahmenteiles 12 auf, wobei zwischen einer dem hinteren Rahmenteil 12 zugewandten inneren Oberfläche 31 des Grundkörpers 30 und dem inneren Rahmenteil 12 ein Keil 6 eingefügt ist, dessen beide Keil flächen nach oben hin spitz zusammenlaufen.

Des weiteren weist der Grundkörper 30 des hinteren Befestigungsknotens 3 auf seiner dem Rahmenteil 12 zugewandten inneren Oberfläche 31 eine konvex geformte Erhebung 32 auf, an der der Befestigungsknoten 3 und das hintere Rahmenteil 12 nach dem Kugel-Pfanne-Prinzip zusammenwirken. In gleicher Weise wie im Fall des vorderen Befestigungsknotens läßt sich daher auch hier durch Verschiebung des Keiles 6 nach oben bzw. nach unten eine Schwenkbewegung des hinteren Rahmenteiles 12 um die Fahrzeuglängsachse erzielen. Dabei wird der obere Abschnitt des hinteren Rahmenteiles 12 zum Fahrzeuginneren hin verschwenkt, wenn der Keil 6 nach oben bewegt wird, wohingegen eine Verschiebung des Keiles 6 nach unten eine entgegengesetzte Schwenkbewegung des Rahmenteiles 12 zur Folge hat.

Der Grundkörper 30 des hinteren Befestigungsknotens 3 weist gemäß Figur 5 und 6 zwei Befestigungsöffnungen in Form von Gewindelöchern 33b, 33c auf, von denen das eine im Bereich des Keiles 6 und das andere im Bereich der konvexen Erhebung 32 vorgesehen ist. Anhand Fig. 6 wird dabei deutlich, daß der Keil 6 mit einem Langloch 5a versehen ist, das mit der zugehörigen Befestigungsöffnung 33b zusammenwirkt und auch nach einer Längsverschiebung des Keiles 6 den Durchgang eines geeigneten Befestigungsmittels einerseits durch die Befestigungsöffnung 33b und andererseits durch den Keil 6 gestattet. Ein entsprechendes Langloch ist auch bei dem vorderen Befestigungsknoten 2 zugeordneten Keil vorgesehen, wenn auch in Fig. 4 nicht erkennbar. Mittels geeigneter Befestigungsbolzen können somit das hintere Rahmenteil 12 und der hintere Befestigungsknoten 3 aneinander befestigt werden, wobei die zuvor mittels Verschiebung des Keiles 6 vorgenommene Einstellung des Rahmens 12 bezüglich des Befestigungsknotens 3 fixiert wird.

In den Figuren 5 und 6 sind noch ein Zapfen 30a des Grundkörpers 30 des Befestigungsknotens 3 sowie zwei weitere Befestigungsöffnungen 33a, 33d erkennbar. Der Zapfen 30a dient zur Einführung in eine entsprechende Aufnahme eines Türkörpers, so daß sich der Befestigungsknoten 3 dort über dem Zapfen 30a abstützt. Die Befestigungsöffnungen 33a, 33d dienen zur Verbindung des hinteren Befestigungsknotens 3 mit dem Türkörper, vergl. Figuren 11 und 12.

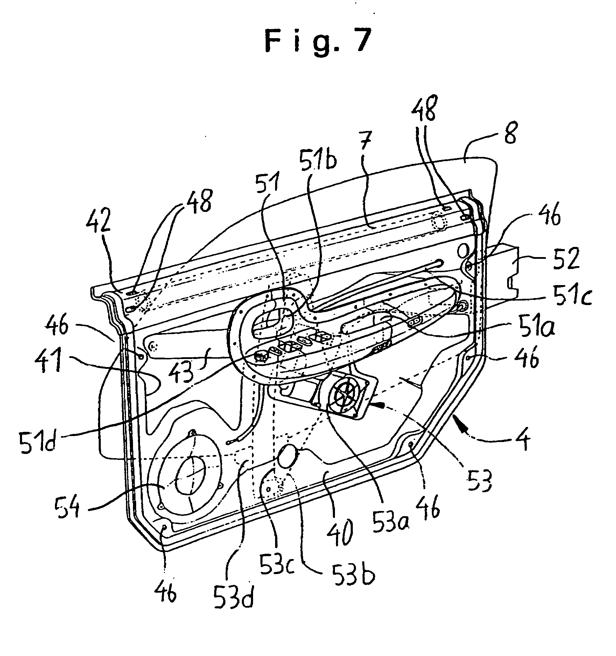

In Fig. 7 ist ein Aggregateträger 4 dargestellt, an dem eine Vielzahl von Funktionskomponenten einer Fahrzeugtür vormontiert ist und der mit der in Fig. 1 gezeigten Rahmenstruktur 1 zu einem Türmodul zusammenfügbar ist.

Der Aggregateträger besteht aus einer eine Ausnehmung 41 aufweisenden Trägerplatte 40 sowie einem profilierten oberen Abschnitt 42, der dem Brüstungsbereich der Fahrzeugtür zugeordnet ist, vergl. Fig. 10.

Der profilierte Abschnitt 42 des Aggregateträgers 4 weist im Vergleich zu der Trägerplatte 40 eine Materialverstärkung auf, wobei der verstärkte Materialabschnitt mittels Laserschweißen mit dem übrigen Teil des Aggregateträgers 4 verbunden ist. Der profilierte Abschnitt 42 des Aggregateträgers 4 umfaßt zudem ein längserstrecktes Verstärkungselement in Form eines Rohres 7, das sich entlang der Fahrzeuglängsachse (x-Achse, vergl. Fig. 10) erstreckt. Dieses ist mit dem profilierten Abschnitt 42 des Aggregateträgers 4 ebenfalls durch Laserschweißen verbunden.

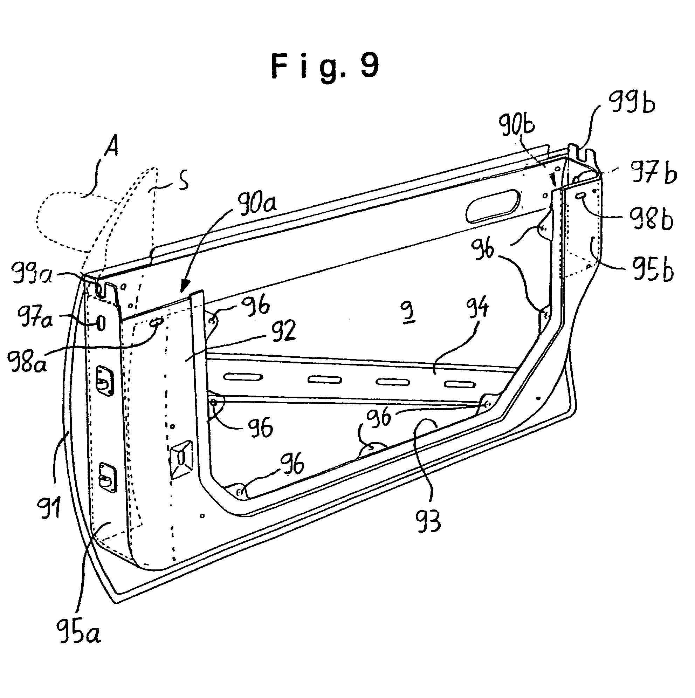

Aufgrund der Versteifung des Aggregateträgers 4 im Brüstungsbereich der Tür durch eine Profilierung des entsprechenden Abschnitts 42 des Aggregateträgers, durch die Verwendung eines Materials mit einer größeren Materialstärke im Vergleich zu der Trägerplatte 40 sowie durch die zusätzliche Anbringung eines längserstreckten Verstärkungselementes in Form eines Rohres 7 ist der Aggregateträger 4 sowohl gegenüber Druckkräften (die bei einem Front-Crash auftreten) als auch gegenüber Biegekräften (als Folge eines Seiten-Crashes) erheblich verstärkt. Somit sind hier wesentliche Elemente zur Sicherung und Versteifung der Tür gegen einen Front- oder Seiten-Crash bereits in den Aggregateträger 4 integriert; im Türkörper selbst, vergl. Fig. 9, muß daher kein solches Verstärkungselement vorgesehen sein.

Der Aggregateträger 4 weist außerdem ein diagonales Versteifungselement 43 auf, das sich über dem Ausschnitt 41 der Trägerplatte 40 erstreckt, sowie eine Vielzahl von Befestigungsstellen in Form von Befestigungsöffnungen 46 zur Verbindung mit einem Türkörper, vergl. Figuren 10 und 11.

Die Trägerplatte 40 des Aggregateträgers 4 dient zur Aufnahme einer Vielzahl von Funktionskomponenten der Fahrzeugtür, die auf der Trägerplatte 40 vormontiert sind. So ist unmittelbar an der Trägerplatte 40 eine Armlehne 51 befestigt, die einen Zuziehgriff 51a, einen Türinnenöffner 51b sowie eine Vielzahl von Bedienelementen 51d aufweist, wobei die Bedienelemente 51d zur Betätigung unterschiedlicher elektrischer Funktionselemente des Fahrzeugs dienen, z.B. eines elektrischen Türschlosses, eines Fensterhebers etc. Des weiteren trägt die Trägerplatte 40 ein elektrisches Türschloß 52, das über eines der Bedienelemente des Bedienfeldes 51d der Armlehne 50 verriegelbar ist und daß außerdem über ein Koppelelement 51c mit dem Türinnenöffner 51b in Wirkverbindung steht.

Auf der Trägerplatte 40 ist ferner ein Fensterheber 53 vormontiert, der eine elektrische Antriebseinheit 53a, ein mittels der Antriebseinheit 53a bewegliches Zugmittel in Form eines Seiles 53b, eine Führungsschiene 53c sowie einen auf der Führungsschiene 53c geführten und mittels des Zugmittels 53b bewegbaren Mitnehmer 53d umfaßt. Dieser Mitnehmer 53d trägt die Fensterscheibe 8 und dient somit zur Anbindung der Fensterscheibe 8 an den Fensterheber 53. Schließlich ist auf der Trägerplatte 40 noch ein Lautsprecher 54 einer Audioeinheit befestigt.

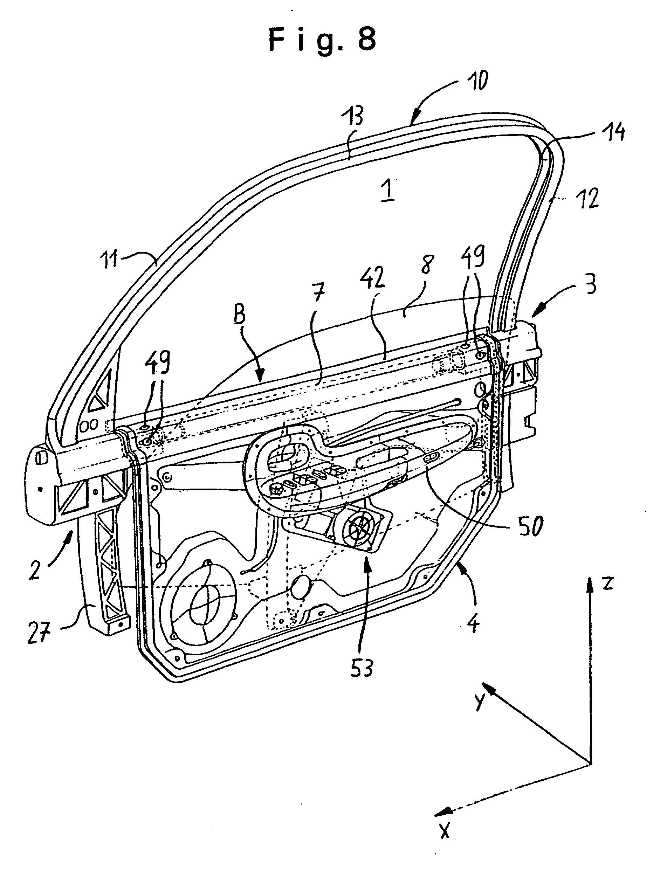

Fig. 8 zeigt das erfindungsgemäße Türmodul im zusammengebauten Zustand, nachdem der Aggregateträger 4 mit der Rahmenstruktur 1 verbunden worden ist. Zur Befestigung dienen dabei Befestigungsschrauben 49, die einerseits die Langlöcher 48 in dem oberen, profilierten Abschnitt 42 des Aggregateträgers 4 (vergl. Fig. 7) sowie andererseits die mit einem Innengewinde versehenen Befestigungsöffnungen 24, 34 in den Vorsprüngen 25, 35 des vorderen und hinteren Befestigungsknotens 2, 3 (vergl. Figuren 4 - 6) durchgreifen.

Anhand Fig. 8 wird deutlich, daß sich der längserstreckte profilierte obere Abschnitt 42 des Aggregateträgers 4 sowie das längserstreckte Verstärkungselement in Form eines Rohres 7 im Brüstungsbereich B des Türmoduls erstrecken.

In dem in Fig. 8 gezeigten Zustand des Türmodules 4, in dem die Rahmenstruktur 1 und der Aggregateträger 4 (zunächst provisorisch) zusammengefügt sind, kann die Einstellung des Fensterrahmens 7 bezüglich der Befestigungsknoten 2, 3 und damit auch bezüglich des Aggregateträgers 4 quer zur Erstreckungsebene des Aggregateträgers 4 (also der xz-Ebene) erfolgen. Wie anhand der Figuren 4 bis 6 und 12 bereits erläutert, wird diese Einstellung dadurch vorgenommen, daß innerhalb des vorderen bzw. hinteren Befestigungsknotens 2, 3 entsprechende Keile entlang der z-Achse nach oben oder unten verschoben werden, was zu einer Schwenkbewegung des Fensterrahmens 10 um eine entlang der Fahrzeuglängsrichtung (x-Richtung) verlaufende Achse (Fahrzeuglängsachse) führt. Hierbei wird die Position des Fensterrahmens 10 quer zur Erstreckungsebene des Aggregateträgers 4 (also entlang der y-Richtung und quer zur xz-Ebene) eingestellt. Diese Position wird dann durch geeignete Befestigungsmittel fixiert, vergl. Fig. 12.

Dies erfolgt bereits vor dem Zusammenbau der kompletten Fahrzeugtür, also insbesondere vor dem Einbau des in Fig. 8 dargestellten Türmoduls in einen entsprechenden Türkörper. Die Einstellung erfolgt in einfacher Weise mittels Lehren, die die gewählten Bezugspunkte der Verbindungsknoten 2, 3 einerseits und des Türrahmens 10 andererseits miteinander in Beziehung setzen.

Beim späteren Einbau des Türmoduls in einen Türkörper ist dann keine weitere Justage des Fensterrahmens 10 erforderlich. Insbesondere kann bereits im Vorfeld eine komplette Abstimmung der Justage des Fensterrahmens 10 einerseits sowie des Fensterhebers 53 andererseits erfolgen, insbesondere im Hinblick darauf, daß die von dem Fensterheber 53 verschiebbare Fensterscheibe 8 ordnungsgemäß in dem Führungskanal 14 des Türrahmens 10 geführt ist.

Wichtig ist dabei, daß das in Fig. 8 dargestellte Türmodul außerhalb der Fahrzeugtür komplett vorprüfbar ist, da es nicht nur die wesentlichen Funktionskomponenten der Fahrzeugtür (Fensterheber und Türschloß), sondern auch die zugehörigen, in die Armlehne 50 integrierten Bedienelemente umfaßt, mit denen diese Funktionskomponenten ansteuerbar sind.

In Fig. 9 ist ein ein Türbasisteil (Unterteil der Türkarosserie) bildender Türkörper 9 dargestellt, der aus einem Türaußenblech 91 und einem mit einem großflächigen Ausschnitt 93 versehenen Türinnenblech 92 besteht, die u.a. an den Stirnseiten 95a, 95b des Türkörpers 9 miteinander verbunden sind. Über den großflächigen Ausschnitt 93 des Türinnenblechs 92 erstreckt sich quer eine Verstärkungsrippe 94. Außerdem ragen in den Ausschnitt 93 eine Vielzahl von Erhebungen hinein, die Befestigungsstellen in Form von Befestigungsöffnungen 96 zur Verbindung mit dem Aggregateträger 4 über dessen Befestigungsöffnungen 46 (vgl. Fig. 7) aufweisen.

Der Türkörper 9 bildet ein Türbasisteil in Form eines Türschachtes mit zwei seitlichen Schachtführungen 90a, 90b, in die die Rahmenstruktur 1 mit ihren Befestigungsknoten 2, 3 (vgl. Fig. 8) einführbar ist. Dabei dienen Aufnahmen 99a, 99b im Bereich der vorderen bzw. hinteren Schachtführ ung 90a, 90b zur Aufnahme entsprechender Zapfen des vorderen bzw. hinteren Befestigungsknotens und Langlöcher 97a, 98a; 97b, 98b der vorderen bzw. hinteren Schachtführ ung 90a, 90b zur Justage des Türmoduls bezüglich des Türkörpers innerhalb der Türebene (xz-Ebene, vergl. Fig. 10).

In Fig. 9 sind ferner ein Außenspiegel A und eine Spiegelaufnahme S gestrichelt angedeutet; diese werden jedoch nicht an dem Türkörper 9, sondern vielmehr an dem einstükkig an den vorderen Befestigungsknoten 2 angeformten Spiegeldreieck 29 (vgl. Fig. 4) befestigt.

Fig. 10 zeigt einen Montageschritt beim Zusammenbau einer Fahrzeugtür aus dem in Fig. 8 dargestellten Türmodul und dem in Fig. 9 dargestellten Türkörper.

Die Rahmenstruktur 1 des Türmoduls wird von oben in die Schachtführungen 90a, 90b des Türkörpers 9 eingeschoben, wobei die vordere Schachtführung 90a dem vorderen Befestigungsknoten 2 und die hintere Schachtführung 90b dem hinteren Befestigungsknoten 3 zugeordnet ist. Das Absenken der Rahmenstruktur 1 in die Schachtführung 90a, 90b des Türkörpers 9 ist abgeschlossen, wenn die hierfür vorgesehenen Zapfen 20a, 30a des vorderen und hinteren Befestigungsknotens 2, 3 in den entsprechenden Aufnahmen 99a, 99b des Türkörpers 9 liegen.

Die Rahmenstruktur 1 und der Türkörper 9 sind dann zunächst provisorisch miteinander verbunden. In diesem Zustand wird die Justage der Rahmenstruktur 1 bezüglich des Türkörpers 9 in der Türebene (xz-Ebene) vorgenommen. Hierzu dienen die Langlöcher 97a, 98a sowie 97b, 98b (vgl. auch Fig. 9) der vorderen bzw. hinteren Schachtführung 90a, 90b. Diese bilden ein Referenzpunktsystem, bezüglich dessen die hierfür vorgesehenen Befestigungslöcher 23a, 23b sowie 33a, 33b (vgl. auch Fig. 4 - 6) des vorderen und hinteren Befestigungsknotens 2, 3 mittels geeigneter Lehren ausgerichtet werden.

Wenn diese Justage abgeschlossen ist, werden der vordere und hintere Befestigungsknoten 2, 3 in der vorderen bzw. hinteren Schachtführung 90a, 90b mittels Befestigungsschrauben 102, 103 (vergl. Fig. 11 und 12) befestigt, wobei diese Befestigungsschrauben einerseits die Langlöcher 97a, 98a; 97b, 98b und andererseits die mit einem Innengewinde versehenen Befestigungsöffnungen 23a, 23b; 33a, 33b durchgreifen.

Einer Justierung des Fensterrahmens 10 bezüglich des Türkörpers 9 quer zu der Türebene (also in der y-Richtung quer zur xz-Ebene) ist dagegen nicht mehr erforderlich; denn der Fensterrahmen 10 wurde in dieser Richtung bereits bezüglich der Befestigungsknoten 2, 3 sowie des Aggregateträgers 4 justiert. Die Befestigungsknoten 2, 3 werden daher ohne Justagespiel bezüglich der y-Richtung in die entsprechenden Schachtführungen 90a, 90b eingesetzt.

Weiterhin wird mittels einer Befestigungsschraube 104, der ein Innengewinde 27b in dem einstückig an dem vorderen Befestigungsknoten 2 angeformten Rahmenteil 27 zugeordnet ist, dieses Rahmenteil 27 durch ein Langloch 98' in dem Türinnenblech 92 hindurch an dem Türkörper 9 befestigt.

Die Fig. 10 und 11 lassen ferner erkennen, daß weitere Befestigungsschrauben 101 vorgesehen sind, um den Aggregateträger 4 über dessen Befestigungsöffnungen 46 und zugehörige Befestigungsöffnungen 96 des Türkörpers 9 an diesem zu befestigen.

Fig. 12 zeigt einen Querschnitt durch die in den Fig. 10 und 11 dargestellte Fahrzeugtür im Bereich des vorderen Befestigungsknotens 2. Diese Darstellung ist insbesondere im Hinblick auf die Justage des Türrahmens bezüglich des vorderen Befestigungsknotens 2 von Interesse und wurde bereits im Zusammenhang mit den Fig. 4 bis 6 erläutert.

Die Fig. 12 läßt außerdem erkennen, daß im Bereich der vorderen Stirnseite 95a des Türkörpers 9 das Türaußenblech 91 mit dem Türinnenblech 92 über eine bodenseitige Verbindungsstelle 91' verbunden ist.

## Patentansprüche

1. Türmodul zur Befestigung an einem ein Türbasisteil bildenden Türkörper (9) einer Kraftfahrzeugtür mit
- einer Rahmenstruktur, die einen Fensterrahmen (10) mit einer Führung für eine Fensterscheibe (8) umfaßt,
- einem Aggregateträger (4) zur Aufnahme von Funktionskomponenten der Fahrzeugtür, an dem zumindest die die Fensterscheibe (8) aufnehmenden Bauelemente eines Fensterhebers vormontiert sind, und
- mindestens einem an der Rahmenstruktur vorgesehenen Befestigungsknoten (2, 3), über den die Rahmenstruktur mit dem Türkörper (9) verbindbar ist, wobei der mindestens eine Befestigungsknoten (2, 3) Mittel (6, 21, 22, 31, 32) zur Einstellung der Position des Fensterrahmens (10) bezüglich des Befestigungsknotens (2, 3) im wesentlichen quer zu der Türebene (xz-Ebene) aufweist, in der sich der Aggregateträger (4) erstreckt.
**dadurch gekennzeichnet,**
**daß** der mindestens eine Befestigungsknoten (2, 3) diese Mittel (6, 21, 22, 31, 32) auch zur Einstellung der Position des Fensterrahmens (10) bezüglich des Aggregateträgers (4) im wesentlichen quer zu der Türebene (xz-Ebene) aufweist, in der sich der Aggregateträger (4) erstreckt.

2. Türmodul nach Anspruch 1, dadurch gekenazeichnet, daß die Mittel (6, 21, 22, 31, 32) zur Einstellung der Position des Fensterrahmens (10) bezüglich des Befestigungsknotens (2, 3) im wesentlichen quer zu der Türebene (xz-Ebene) an dem Befestigungsknoten (2, 3) vorgesehen sind.

3. Türmodul nach Anspruch 1 oder 2, **dadurch gekennzeichnet, daß** der Befestigungsknoten (2, 3) durch ein separates Bauteil des Türmodules (1 - 4) gebildet wird.

4. Türmodul nach einem der vorhergehenden Ansprüche, **dadurch gekennzeichnet, daß** der Befestigungsknoten (2, 3) im Bereich eines der Fensteröffnung zugewandten oberen Endabschnittes (42) des Aggregateträgers (4) angeordnet ist.

5. Türmodul nach einem der vorhergehenden Ansprüche, **dadurch gekennzeichnet, daß** der Befestigungsknoten (2, 3) in der Türebene (xz-Ebene) seitlich von dem Aggregateträger (4) absteht.

6. Türmodul nach einem der vorhergehenden Ansprüche, **dadurch gekennzeichnet, daß** der Befestigungsknoten (2, 3) zur Aufnahme von Teilen des Fensterrahmens (10) sowie von Mitteln (6, 21, 22, 31, 32) zur Einstellung der Position des Fensterrahmens (10) gehäuseartig ausgebildet ist.

7. Türmodul nach einem der vorhergehenden Ansprüche, **dadurch gekennzeichnet, daß** der Befestigungsknoten (2, 3) und der Aggregateträger (4) eine Baueinheit bilden, bezüglich der die Position des Fensterrahmens (10) einstellbar ist.

8. Türmodul nach einem der vorhergehenden Ansprüche, **dadurch gekennzeichnet, daß** der Fensterrahmen (10) im wesentlichen quer zu der Türebene (xz-Ebene) sowohl hinsichtlich des Aggregateträgers (4) als auch hinsichtlich des Türkörpers (9) einstellbar ist.

9. Türmodul nach Anspruch 8, **dadurch gekennzeichnet, daß** dem Fensterrahmen (10) ein bezüglich der Fahrzeuglängsrichtung (x) vorderer und ein hinterer Befestigungsknoten (2, 3) zugeordnet sind, wobei vorzugsweise jeder der beiden Befestigungsknoten (2, 3) Mittel (6, 21, 22, 31, 32) zur Einstellung der Position des Fensterrahmens (10) aufweist.

10. Türmodul nach einem der vorhergehenden Ansprüche, **dadurch gekennzeichnet, daß** die Mittel (6, 21, 22, 31, 32) zur Einstellung der Position des Fensterrahmens (10) zum Verschwenken des Fensterrahmens (10) bezüglich des Befestigungsknotens (2, 3) vorgesehen sind.

11. Türmodul nach Anspruch 10, **dadurch gekennzeichnet, daß** der Fensterrahmen (10) bezüglich des Befestigungsknotens (2, 3) um eine im wesentlichen zur Fahrzeuglängsachse (x) verlaufende Achse schwenkbar ist.

12. Türmodul nach Anspruch 10 oder 11, **dadurch gekennzeichnet, daß** der Fensterrahmen (10) und der Befestigungsknoten (2, 3) nach dem Kugel-Pfanne-Prinzip zusammenwirken.

13. Türmodul nach einem der vorhergehenden Ansprüche, **dadurch gekennzeichnet, daß** die Mittel (6, 21, 22, 31, 32) zur Einstellung der Position des Fensterrahmens (10) einen Keil (6) umfassen, der zwischen dem Fensterrahmen (10) und dem Befestigungsknoten (2, 3) angeordnet ist.

14. Türmodul nach Anspruch 13, **dadurch gekennzeichnet, daß** der Keil (6) in der Türebene (xz-Ebene), insbesondere quer zur Fahrzeuglängsachse (x) zwischen dem Befestigungsknoten (2, 3) und dem Fensterrahmen (10) verschiebbar ist.

15. Türmodul nach Anspruch 14, **dadurch gekennzeichnet, daß** der Keil (6) in der Türebene (xz-Ebene) zwischen dem Befestigungsknoten (2, 3) und dem Fensterrahmen (10) verschwenkbar ist.

16. Türmodul nach einem der vorhergehenden Ansprüche, **dadurch gekennzeichnet, daß** die Mittel (6, 21, 22, 31, 32) zur Einstellung der Position des Fensterrahmens (10) unabhängig von den Befestigungsmitteln (63, 64) wirken, über die der Fensterrahmen (10) mit dem Befestigungsknoten (2, 3) verbunden ist.

17. Türmodul nach einem der vorhergehenden Ansprüche, **dadurch gekennzeichnet, daß** die Mittel (6, 21, 22, 31, 32) zur Einstellung der Position des Fensterrahmens (10) durch die Befestigungsmittel (63, 64) in einer definierten Position arretierbar sind.

18. Türmodul nach einem der vorhergehenden Ansprüche, **dadurch gekennzeichnet, daß** das Türmodul (1 - 4) Mittel (7, 42, 43) zur Versteifung der Tür aufweist.

19. Türmodul nach Anspruch 18, **dadurch gekennzeichnet, daß** die Mittel (7, 42) zur Versteifung der Tür im Brüstungsbereich (B) der Tür vorgesehen sind.

20. Türmodul nach Anspruch 18 oder 19, **dadurch gekennzeichnet, daß** die Mittel (7, 42) zur Versteifung der Tür ein längserstrecktes Verstärkungselement (7) umfassen, das sich in Fahrzeuglängsrichtung (x) erstreckt und das mit dem oder den Befestigungsknoten (2, 3) verbunden ist.

21. Türmodul nach Anspruch 9 und Anspruch 20, **dadurch gekennzeichnet, daß** sich die Mittel (7, 42) zur Versteifung der Tür zwischen den beiden Befestigungsknoten (2, 3) erstrecken und mit jedem der beiden Befestigungsknoten (2, 3) verbunden sind.

22. Türmodul nach Anspruch 20 oder 21, **dadurch gekennzeichnet, daß** das längserstreckte Verstärkungselement (7) zumindest im Bereich des oder der Befestigungsknoten (2, 3) rohrförmig ausgebildet ist.

23. Türmodul nach einem der Ansprüche 20 bis 22, **dadurch gekennzeichnet, daß** sich das längserstreckte2 Verstärkungselement (7) an dem oder den Befestigungsknoten (2, 3) abstützt.

24. Türmodul nach einem der Ansprüche 20 bis 23, **dadurch gekennzeichnet, daß** das längserstreckte Verstärkungselement (7) formschlüssig mit dem oder den Befestigungsknoten (2, 3) verbunden ist.

25. Türmodul nach Anspruch 24, **dadurch gekennzeichnet, daß** die formschlüssige Verbindung durch eine Steckverbindung gebildet wird.

26. Türmodul nach einem der Ansprüche 20 bis 25, **dadurch gekennzeichnet, daß** das längserstreckte Verstärkungselement (7) zusätzlich mit dem Aggregateträger (4) verbunden ist, insbesondere durch eine stoffschlüssige Verbindung.

27. Türmodul nach einem der Ansprüche 20 bis 26, **dadurch gekennzeichnet, daß** der Aggregateträger (4) im Bereich des längserstreckten Verstärkungselementes (7) verstärkt und/oder profiliert ist.

28. Türmodul nach einem der vorhergehenden Ansprüche, **dadurch gekennzeichnet, daß** an dem Aggregateträger (4) Funktionskomponenten (51 - 54) der Fahrzeugtür vormontiert sind.

29. Türmodul nach einem der vorhergehenden Ansprüche, **dadurch gekennzeichnet, daß** mindestens ein Befestigungsknoten (2, 3) Mittel (23a, 23b, 33a, 33b) zur Einstellung der Position des Befestigungsknotens (2, 3) bezüglich des Türkörpers (9) in Fahrzeuglängsrichtung (x) und/oder quer zur Türebene (xz-Ebene) aufweist, die mit entsprechenden Mitteln (97a, 97b, 98a, 98b) des Türkörpers (9) zusammenwirken können.

30. Kraftfahrzeugtür mit einem ein Türbasisteil bildenden Türkörper (9) und mit einem Türmodul (1 - 4) nach einem der vorhergehenden Ansprüche, das mit dem Türkörper (9) verbindbar ist.

31. Kraftfahrzeugtür nach Anspruch 30, **dadurch gekennzeichnet, daß** das Türmodul (1 - 4) mit mindestens einem Abschnitt (12, 27) seiner Rahmenstruktur (1) in den Türkörper (9) einschiebbar ist.

32. Kraftfahrzeugtür nach Anspruch 30 oder 31, **dadurch gekennzeichnet, daß** die Position des Türmoduls (1 - 4) bezüglich des Türkörpers (9) in Fahrzeuglängsrichtung (x) und/oder quer zur Türebene (xz-Ebene) einstellbar ist.

33. Kraftfahrzeugtür nach Anspruch 32, **dadurch gekennzeichnet, daß** zur Einstellung der Position des Türmoduls (1 - 4) bezüglich des Türkörpers (9) mindestens ein Bolzen (102, 103) vorgesehen ist, dem ein Langloch (97a, 97b, 98a, 98b) zugeordnet ist, das sich entlang der jeweiligen Einstellrichtung erstreckt.

34. Kraftfahrzeugtür nach Anspruch 32 oder 33, **dadurch gekennzeichnet, daß** zur Einstellung der Position des Türmoduls (1 - 4) die Position des mindestens einem Befestigungsknotens (2, 3) bezüglich des Türkörpers (9) einstellbar ist.

35. Kraftfahrzeugtür nach einem der Ansprüche 30 bis 34, **dadurch gekennzeichnet, daß** das Türmodul (1 - 4) im wesentlichen ohne Justagespiel senkrecht zur Türebene (xz-Ebene) mit dem Türkörper (9) verbindbar ist.

36. Verfahren zur Montage einer Kraftfahrzeugtür nach einem der Ansprüche 30 bis 35, die einen ein Türbasisteil bildenden Türkörper (9) sowie ein Türmodul (1 - 4) umfaßt, wobei das Türmodul (1 - 4) folgendes aufweist:
- eine Rahmenstruktur, die einen Fensterrahmen (10) mit einer Führung für eine Fensterscheibe (8) umfaßt,
- einen Aggregateträger (4) zur Aufnahme von Funktionskomponenten der Fahrzeugtür, an dem zumindest die die Fensterscheibe (8) aufnehmenden Bauelemente eines Fensterhebers vormontiert sind, und
- mindestens einen an der Rahmenstruktur vorgesehenen Befestigungsknoten (2, 3), über den die Rahmenstruktur mit dem Türkörper (9) verbindbar ist,
**dadurch gekennzeichnet,**
**daß** vor der Verbindung des Türmoduls (1 - 4) mit dem Türkörper (9) die Position des Fensterrahmens (10) bezüglich des Befestigungsknotens (2, 3) und des Aggregateträgers (4) im wesentlichen quer zu der Türebene (xz-Ebene) eingestellt wird, in der sich der Aggregateträger (4) erstreckt.

37. Verfahren nach Anspruch 36, **dadurch gekennzeichnet, daß** die Einstellung der Position des Fensterrahmens (10) durch Verschwenken des Fensterrahmens (10) um eine in der Türebene (xz-Ebene) liegende Achse (x-Achse) erfolgt.

38. Verfahren nach Anspruch 36 oder 37, **dadurch gekennzeichnet, daß** beim Zusammenbau des Türmoduls (1 - 4) mit dem Türkörper (9) die Position des Türmoduls (1 - 4) bezüglich des Türkörpers (9) ausschließlich in der Türebene (xz-Ebene) eingestellt wird.

39. Verfahren nach einem der Ansprüche 36 bis 39, **dadurch gekennzeichnet, daß** bei der Montage und Justage der einzelnen Türelemente (1 - 4, 9, 10) Lehren verwendet werden, mittels derer Referenzpunkte der einzelnen Türelemente (1 - 4, 9, 10) miteinander in Beziehung gesetzt werden.

## Claims

1. Door module for fixing to a door body (9) forming a door base component of a motor vehicle door with
- a frame structure comprising a window frame (10) with guide for a window pane (8)
- an assembly carrier (4) for holding function components of the vehicle door on which at least the structural elements of a window lifter holding the window pane (8) are prefitted, and
- at least one fixing node (2, 3) provided on the frame structure and through which the frame structure can be connected to the door body (9), wherein the at least one fixing node (2, 3) has means (6, 21, 22, 31, 32) for adjusting the position of the window frame (10) relative to the fixing node (2, 3) and assembly support (4) substantially transverse to the door plane (xz-plane) in which the assembly support (4) extends
**characterised in that**
the at least one fixing node (2, 3) has means (6, 21, 22, 31, 32) for adjusting the position of the window frame (10) relative to the assembly carrier (4) and assembly support (4) substantially transverse to the door plane (xz-plane) in which the assembly support (4) extends.

2. Door module according to claim 1 **characterised in that** the means (6, 21, 22, 31, 32) for adjusting the position of the window frame (10) relative to the fixing node (2, 3) substantially transverse to the door plane (xz-plane) are provided on the fixing node (2, 3).

3. Door module according to claim 1 or 2 **characterised in that** the fixing node (2, 3) is formed by a separate structural part of the door module (1-4).

4. Door module according to one of the preceding claims **characterised in that** the fixing node (2, 3) is mounted in the region of an upper end section (42) of the assembly carrier (4) facing the window opening.

5. Door module according to one of the preceding claims **characterised in that** the fixing node (2, 3) protrudes in the door plane (xz-plane) laterally from the assembly carrier (4).

6. Door module according to one of the preceding claims **characterised in that** the fixing node (2, 3) is formed like a housing for holding the parts of the window frame (10) as well as the means (6, 21, 22, 31, 32) for adjusting the position of the window frame (10).

7. Door module according to one of the preceding claims **characterised in that** the fixing node (2, 3) and the assembly carrier (4) form one structural unit relative to which the position of the window frame (10) can be adjusted.

8. Door module according to one of the preceding claims **characterised in that** the window frame (10) is adjustable substantially transversely to the door plane (xz-plane) both in respect of the assembly carrier (4) and in respect of the door body (9).

9. Door module according to claim 8 **characterised in that** the window frame (10) is associated with a front and a rear fixing node (2, 3) in relation to the longitudinal axis of the vehicle, wherein preferably each of the two fixing nodes (2, 3) has means (6, 21, 22, 31, 32) for adjusting the position of the window frame (10).

10. Door module according to one of the preceding claims **characterised in that** the means (6, 21, 22, 31 32) for adjusting the position of the window frame (10) are provided for swivelling the window frame (10) relative to the fixing node (2, 3).

11. Door module according to claim 10 **characterised in that** the window frame (10) is able to swivel relative to the fixing node (2, 3) about an axis running substantially towards the longitudinal axis (x) of the vehicle.

12. Door module according to claim 10 or 11 **characterised in that** the window frame (10) and the fixing node (2, 3) interact on the ball and socket principle.

13. Door module according to one of the preceding claims **characterised in that** the means (6, 21, 22, 31, 32) for adjusting the position of the window frame (10) comprise a wedge (6) which is mounted between the window frame (10) and fixing node (2, 3).

14. Door module according to claim 13 **characterised in that** the wedge (6) is displaceable in the door plane (xz-plane), more particularly transverse to the longitudinal axis (x) of the vehicle between the fixing node (2, 3) and the window frame (10).

15. Door module according to claim 14 **characterised in that** the wedge (6) is able to swivel in the door plane (xz-plane) between the fixing node (2, 3) and the window frame (10).

16. Door module according to one of the preceding claims **characterised in that** the means (6, 21, 22, 31, 32) for adjusting the position of the window frame (10) act independently of the fixing means (63, 64) through which the window frame (10) is connected to the fixing node (2, 3).

17. Door module according to one of the preceding claims **characterised in that** the means (6, 21, 22, 31, 32) for adjusting the position of the window frame (10) can be locked in a defined position through the fixing means (63, 64).

18. Door module according to one of the preceding claims **characterised in that** the door module (1-4) has means (7, 42, 43) for reinforcing the door.

19. Door module according to claim 18 **characterised in that** the means (7, 42) for reinforcing the door are provided in the breast area (B) of the door.

20. Door module according to claim 18 or 19 **characterised in that** the means (7, 42) for reinforcing the door comprise a longitudinally extended reinforcement element (7) which extends in the vehicle longitudinal direction (x) and is connected to the or each fixing node (2, 3).

21. Door module according to claim 9 and claim 20 **characterised in that** the means (7, 42) for reinforcing the door extend between the two fixing nodes (2, 3) and are connected to each of the two fixing nodes (2, 3).

22. Door module according to claim 20 or 21 **characterised in that** the longitudinally extended reinforcement element (7) is formed tubular at least in the region of the or each fixing node (2, 3).

23. Door module according to one of claims 20 to 22 **characterised in that** the longitudinally extended reinforcement element (7) is supported on the or each fixing node (2, 3).

24. Door module according to one of claims 20 to 23 **characterised in that** the longitudinally extended reinforcement element (7) is connected with keyed engagement to the or each fixing node (2, 3).

25. Door module according to claim 24 **characterised in that** the keyed connection is formed by a plug fit connection.

26. Door module according to one of claims 20 to 25 **characterised in that** the longitudinally extended reinforcement element (7) is additionally connected to the assembly carrier (4), more particularly through a material-bonding connection.

27. Door module according to one of claims 20 to 26 **characterised in that** the assembly carrier (4) is strengthened and/or profiled in the region of the longitudinally extended reinforcement element (7).

28. Door module according to one of the preceding claims **characterised in that** function components (51 - 54) of the vehicle door are prefitted on the assembly carrier (4).

29. Door module according to one of the preceding claims **characterised in that** at least one fixing node (2, 3) has means (23a, 23b, 33a, 33b) for adjusting the position of the fixing node relative to the door body (9) in the vehicle longitudinal direction (x) and/or transverse to the door plane (xz-plane), and these means can interact with corresponding means (97a, 97b, 98a, 98b) of the door body (9).

30. Motor vehicle door having a door body (9) forming a base component of the door and having a door module (1 - 4) according to one of the preceding claims which can be connected to the door body (9).

31. Motor vehicle door according to claim 30 **characterised in that** the door module (1 - 4) can be pushed by at least one section (12, 27) of its frame structure (1) into the door body (9).

32. Motor vehicle door according to claim 30 or 31 **characterised in that** the position of the door module (1-4) can be adjusted relative to the door body (9) in the vehicle longitudinal direction (x) and/or transverse to the door plane (xz-plane).

33. Motor vehicle door according to claim 32 **characterised in that** in order to adjust the position of the door module (1-4) relative to the door body (9) at least one bolt (102, 103) is provided which is associated with an oblong hole (97a, 97b, 98a, 98b) which extends along the relevant adjusting direction.

34. Motor vehicle door according to claim 32 or 33 **characterised in that** in order to adjust the position of the door module (1-4) the position of the at least one fixing node. (2, 3) is adjustable relative to the door body (9).

35. Motor vehicle door according to one of claims 30 to 34 **characterised in that** the door module (1-4) can be connected to the door body (9) substantially without any adjustment play perpendicular to the door plane (xz-plane).

36. Method for assembling a vehicle door according to one of claims 30 to 35 which comprises a door body (9) forming a base component of the door, as well as a door module (1-4), wherein the door module (1-4) has the following:
- a frame structure which comprises a window frame (10) with a guide for a window pane (8)
- an assembly carrier (4) for holding function components of the vehicle door, on which at least the structural elements of a window lifter holding the window pane (8) are prefitted, and
- at least one fixing node (2, 3) provided on the frame structure and through which the frame structure can be connected to the door body (9)
**characterised in that** prior to connecting the door module (1-4) to the door body (9) the position of the window frame (10) is adjusted relative to the fixing node (2, 3) substantially transverse to the door plane (xz-plane) in which the assembly carrier (4) extends.

37. Method according to claim 36 **characterised in that** adjusting the position of the window frame (10) is carried out by swivelling the window frame (10) about an axis (x-axis) lying in the door plane (xz-plane).

38. Method according to claim 36 or 37 **characterised in that** when fitting together the door module (1-4) and door body (9) the position of the door module (1-4) relative to the door body (9) is adjusted solely in the door plane (xz-plane).

39. Method according to one of claims 36 to 39 **characterised in that** when assembling and adjusting the individual door elements (1-4, 9, 10) gauges are used by means of which reference points of the individual door elements (1-4, 9, 10) are set in relation to each other.

## Revendications

1. Module de porte à fixer sur un corps de porte (9) constituant une partie de base de porte d'un véhicule automobile avec
- une structure de cadre comprenant un encadrement de fenêtre (10) avec un guide pour une vitre (8),
- un support d'éléments (4) pour recevoir les composants fonctionnels de la porte du véhicule sur lequel sont montés de manière préliminaire au moins les composants d'un lève-vitre recevant la vitre (8) et
- au moins un élément nodal de fixation (2, 3) prévu sur la structure de cadre, par l'intermédiaire duquel la structure de cadre peut être reliée avec le corps de porte (9), l'au moins un élément nodal de fixation (2, 3) comprenant des moyens (6, 21, 22, 31, 32) pour régler la position de l'encadrement de fenêtre (10) par rapport à l'élément nodal de fixation (2, 3) sensiblement dans le sens transversal par rapport au plan de la porte (plan xz), dans lequel s'étend le support d'éléments (4),
**caractérisé en ce que** l'au moins un élément nodal de fixation (2, 3) comprend ces moyens (6, 21, 22, 31, 32) également pour régler la position de l'encadrement de fenêtre (10) par rapport au support d'éléments (4) sensiblement dans le sens transversal par rapport au plan de la porte (plan xz), dans lequel s'étend le support d'éléments (4).

2. Module de porte selon la revendication 1, **caractérisé en ce que** les moyens (6, 21, 22, 31, 32) pour régler la position de l'encadrement de fenêtre (10) par rapport à l'élément nodal de fixation (2, 3) sensiblement dans le sens transversal par rapport au plan de la porte (plan xz) sont prévus sur l'élément nodal de fixation (2, 3).

3. Module de porte selon la revendication 1 ou 2, **caractérisé en ce que** l'élément nodal de fixation (2, 3) est formé par un composant séparé du module de porte (1 - 4).

4. Module de porte selon l'une quelconque des revendications précédentes, **caractérisé en ce que** l'élément nodal de fixation (2, 3) est disposé dans la zone d'une section d'extrémité supérieure (42) du support d'éléments (4) dirigée vers l'ouverture de la fenêtre.

5. Module de porte selon l'une quelconque des revendications précédentes, **caractérisé en ce que** l'élément nodal de fixation (2, 3) dépasse latéralement du support d'éléments (4) dans le plan de la porte (plan xz).

6. Module de porte selon l'une quelconque des revendications précédentes, **caractérisé en ce que** l'élément nodal de fixation (2, 3) est configuré à la manière d'un boîtier pour recevoir des parties de l'encadrement de fenêtre (10) ainsi que des moyens (6, 21, 22, 31, 32) pour régler la position de l'encadrement de fenêtre (10).

7. Module de porte selon l'une quelconque des revendications précédentes, **caractérisé en ce que** l'élément nodal de fixation (2, 3) et le support d'éléments (4) forment une unité d'équipement par rapport à laquelle peut être réglée la position de l'encadrement de fenêtre (10).

8. Module de porte selon l'une quelconque des revendications précédentes, **caractérisé en ce que** l'encadrement de fenêtre (10) peut être réglé sensiblement dans le sens transversal par rapport au plan de la porte (plan xz), et ceci aussi bien par rapport au support d'éléments (4) que par rapport au corps de porte (9).

9. Module de porte selon la revendication 8, **caractérisé en ce qu'**à l'encadrement de fenêtre (10) sont attribués un élément nodal de fixation (2, 3) se trouvant à l'avant et un élément nodal de fixation (2, 3) se trouvant à l'arrière par rapport à la direction longitudinale du véhicule (x), chacun des deux éléments nodaux de fixation (2, 3) comprenant de préférence des moyens (6, 21, 22, 31, 32) pour régler la position de l'encadrement de fenêtre (10).

10. Module de porte selon l'une quelconque des revendications précédentes, **caractérisé en ce que** les moyens (6, 21, 22, 31, 32) pour régler la position de l'encadrement de fenêtre (10) sont prévus pour faire pivoter l'encadrement de fenêtre (10) par rapport à l'élément nodal de fixation (2, 3).

11. Module de porte selon la revendication 10, **caractérisé en ce que** l'encadrement de fenêtre (10) peut être pivoté par rapport à l'élément nodal de fixation (2, 3) autour d'un axe s'étendant sensiblement dans la direction de l'axe longitudinal (x) du véhicule.

12. Module de porte selon la revendication 10 ou 11, **caractérisé en ce que** l'encadrement de fenêtre (10) et l'élément nodal de fixation (2, 3) agissent de concert selon le principe du coussinet sphérique.

13. Module de porte selon l'une quelconque des revendications précédentes, **caractérisé en ce que** les moyens (6, 21, 22, 31, 32) pour régler la position de l'encadrement de fenêtre (10) comprennent une cale (6) qui est disposée entre l'encadrement de fenêtre (10) et l'élément nodal de fixation (2, 3).

14. Module de porte selon la revendication 13, **caractérisé en ce que** la cale (6) est déplaçable dans le plan de la porte (plan xz), en particulier dans le sens transversal par rapport à l'axe longitudinal (x) du véhicule entre l'élément nodal de fixation (2, 3) et l'encadrement de fenêtre (10).

15. Module de porte selon la revendication 14, **caractérisé en ce que** la cale (6) peut être pivotée dans le plan de la porte (plan xz) entre l'élément nodal de fixation (2, 3) et l'encadrement de fenêtre (10).

16. Module de porte selon l'une quelconque des revendications précédentes, **caractérisé en ce que** les moyens (6, 21, 22, 31, 32) pour régler la position de l'encadrement de fenêtre (10) agissent indépendamment des moyens de fixation (63, 64), à l'aide desquels l'encadrement de fenêtre (10) est relié avec l'élément nodal de fixation (2, 3).

17. Module de porte selon l'une quelconque des revendications précédentes, **caractérisé en ce que** les moyens (6, 21, 22, 31, 32) pour régler la position de l'encadrement de fenêtre (10) peuvent être bloqués par les moyens de fixation (63, 64) dans une position définie.

18. Module de porte selon l'une quelconque des revendications précédentes, **caractérisé en ce que** le module de porte (1 - 4) comprend des moyens (7, 42, 43) pour le raidissement de la porte.

19. Module de porte selon la revendication 18, **caractérisé en ce que** les moyens (7, 42) pour le raidissement de la porte sont prévus dans la zone de l'appui (B) de la porte.

20. Module de porte selon la revendication 18 ou 19, **caractérisé en ce que** les moyens (7, 42) pour le raidissement de la porte comprennent un élément de renforcement étiré en longueur (7), qui s'étend dans la direction longitudinale du véhicule (x) et qui est relié avec l'élément nodal de fixation ou les éléments nodaux de fixation (2, 3).

21. Module de porte selon la revendication 9 et la revendication 20, **caractérisé en ce que** les moyens (7, 42) pour le raidissement de la porte s'étendent entre les deux éléments nodaux de fixation (2, 3) et sont reliés avec chacun des deux éléments nodaux de fixation (2, 3).

22. Module de porte selon la revendication 20 ou 21, **caractérisé en ce que** l'élément de renforcement étiré en longueur (7) est, au moins dans la zone de l'élément nodal de fixation ou des éléments nodaux de fixation (2, 3), configuré en forme de tube.

23. Module de porte selon l'une quelconque des revendications 20 à 22, **caractérisé en ce que** l'élément de renforcement étiré en longueur (7) s'appuie sur l'élément nodal de fixation ou sur les éléments nodaux de fixation (2, 3).

24. Module de porte selon l'une quelconque des revendications 20 à 23, **caractérisé en ce que** l'élément de renforcement étiré en longueur (7) est relié en complémentarité de forme avec l'élément nodal de fixation ou avec les éléments nodaux de fixation (2, 3).

25. Module de porte selon la revendication 24, **caractérisé en ce que** la liaison en complémentarité de forme est constituée par un élément de connexion enfichable.

26. Module de porte selon l'une quelconque des revendications 20 à 25, **caractérisé en ce que** l'élément de renforcement étiré en longueur (7) est relié en outre avec le support d'éléments (4), en particulier par l'intermédiaire d'une liaison en complémentarité de matière.

27. Module de porte selon l'une quelconque des revendications 20 à 26, **caractérisé en ce que** le support d'éléments (4) est renforcé et/ou profilé dans la zone de l'élément de renforcement étiré en longueur (7).

28. Module de porte selon l'une quelconque des revendications précédentes, **caractérisé en ce que** des composants fonctionnels (51 - 54) de la porte du véhicule font l'objet d'un montage préalable sur le support d'éléments (4).

29. Module de porte selon l'une quelconque des revendications précédentes, **caractérisé en ce qu'**au moins un élément nodal de fixation (2, 3) comprend des moyens (23a, 23b, 33a, 33b) pour régler la position de l'élément nodal de fixation (2, 3) par rapport au corps de porte (9) dans la direction longitudinale du véhicule (x) et/ou dans le sens transversal par rapport au plan de la porte (plan xz), ces moyens pouvant agir de concert avec des moyens correspondants (97a, 97b, 98a, 98b) du corps de porte (9).

30. Porte de véhicule automobile avec un corps de porte (9) constituant une partie de base de porte et avec un module de porte (1 - 4) selon l'une quelconque des revendications précédentes qui peut être relié avec le corps de porte (9).

31. Porte de véhicule automobile selon la revendication 30, **caractérisée en ce que** le module de porte (1 - 4) peut être introduit dans le corps de porte (9) avec au moins une section (12, 27) de sa structure de cadre (1).

32. Porte de véhicule automobile selon la revendication 30 ou 31, **caractérisée en ce que** la position du module de porte (1 - 4) par rapport au corps de porte (9) est réglable dans la direction longitudinale du véhicule (x) et/ou dans le sens transversal par rapport au plan de la porte (plan xz).

33. Porte de véhicule automobile selon la revendication 32, **caractérisée en ce qu'**au moins une goupille (102, 103), à laquelle est associé un trou oblong (97a, 97b, 98a, 98b) s'étendant le long de la direction de réglage respective, est prévue pour le réglage de la position du module de porte (1 - 4) par rapport au corps de porte (9).

34. Porte de véhicule automobile selon la revendication 32 ou 33, **caractérisée en ce que**, pour ajuster la position du module de porte (1 - 4), il est possible de régler la position de l'au moins un élément nodal de fixation (2, 3) par rapport au corps de porte (9).

35. Porte de véhicule automobile selon l'une quelconque des revendications 30 à 34, **caractérisée en ce que** le module de porte (1 - 4) peut, perpendiculairement au plan de la porte (plan xz), être relié sensiblement sans jeu d'ajustement avec le corps de porte (9).

36. Procédé de montage d'une porte de véhicule automobile selon l'une quelconque des revendications 30 à 35 qui comprend un corps de porte (9) constituant une partie de base de porte ainsi qu'un module de porte (1 - 4), le module de porte (1 - 4) comprenant ce qui suit :
- une structure de cadre comprenant un encadrement de fenêtre (10) avec un guide pour une vitre (8),
- un support d'éléments (4) pour recevoir des composants fonctionnels de la porte du véhicule sur lequel sont montés de manière préliminaire au moins les composants d'un lève-vitre recevant la vitre (8) et
- au moins un élément nodal de fixation (2, 3) prévu sur la structure de cadre, par l'intermédiaire duquel la structure de cadre peut être reliée avec le corps de porte (9),
**caractérisé en ce qu'**avant la liaison du module de porte (1 - 4) avec le corps de porte (9), la position de l'encadrement de fenêtre (10) par rapport à l'élément nodal de fixation (2, 3) et au support d'éléments (4) est réglée sensiblement dans le sens transversal par rapport au plan de la porte (plan xz) dans lequel s'étend le support d'éléments (4).

37. Procédé selon la revendication 36, **caractérisé en ce que** le réglage de la position de l'encadrement de fenêtre (10) a lieu par un pivotement de l'encadrement de fenêtre (10) autour d'un axe (axe x) situé dans le plan de la porte (plan xz).

38. Procédé selon la revendication 36 ou 37, **caractérisé en ce que**, lors de l'assemblage du module de porte (1 - 4) avec le corps de porte (9), la position du module de porte (1 - 4) par rapport au corps de porte (9) est réglée exclusivement dans le plan de la porte (plan xz).

39. Procédé selon l'une quelconque des revendications 36 à 38, **caractérisé en ce que** des jauges, à l'aide desquelles des points de référence des différents éléments de porte (1 - 4, 9, 10) sont mis en relation entre eux, sont utilisées lors du montage et de l'ajustement des différents éléments de porte (1 - 4, 9, 10).
